# EUROPÄISCHE PATENTSCHRIFT

(11) **EP 0 740 793 B1**
(45) Veröffentlichungstag und Bekanntmachung des Hinweises auf die Patenterteilung: **24.03.1999**
(21) Anmeldenummer: 95905528.6
(22) Anmeldetag: 10.01.1995
(51) Int. Cl.: G01P 15/08, G01P 15/13

(54) **TUNNELEFFEKT-SENSOR**
TUNNEL EFFECT SENSOR
CAPTEUR A EFFET TUNNEL

(30) Priorität: 18.01.1994 DE 4401303
(43) Veröffentlichungstag der Anmeldung: 06.11.1996
(73) Patentinhaber: SIEMENS AKTIENGESELLSCHAFT, 80333 München (DE)
(72) Erfinder: BIEBL, Markus, D-86163 Augsburg (DE)
(86) Internationale Anmeldenummer: DE9500020
(87) Internationale Veröffentlichungsnummer: WO9519571

(56) Entgegenhaltungen:
- WO-A-92/03740
- DE-A- 4 214 400
- US-A- 5 211 051

## Beschreibung

Die vorliegende Erfindung betrifft einen Tunneleffekt-Sensor, insbesondere einen Beschleunigungssensor auf Silizium.

Moderne Navigationssysteme erfordern kleine, einfach herstellbare und zuverlässige Beschleunigungssensoren mit einer Meßgenauigkeit bis in den Bereich von 1 millionstel Erdbeschleunigung. Auch bei anderen Sensoren, wie z. B. bei Mikrophonen und Drucksensoren, ist es erforderlich, eine zeitlich variable Wegdifferenz bei beweglich angebrachten Teilen mit sehr hoher Genauigkeit zu bestimmen. Das ist möglich unter Ausnutzung des Tunneleffektes. Bei derartigen Sensoren, wie sie z. B. von T.W. Kenny et al. in Applied Pnysics Letters 58, 100 bis 102 (1991) und J. Vac. Sci. Technol. A10 (4), 2114 bis 2118 (1992) beschrieben sind, wird der Tunneleffekt zwischen einer an einem beweglichen Balken angeordneten Spitze und dem Siliziumsubstrat für die Messung ausgenutzt.

Aufgabe der vorliegenden Erfindung ist es, einen einfach herstellbaren Tunneleffekt-Sensor, dessen Tunnelspitze bei abgeschalteter Spannung vor Zerstörung geschützt ist und der in Empfindlichkeitsrichtung sowohl positive als auch negative Kräfte messen kann, insbesondere für monolithische Integration mit elektronischen Funktionselementen, und ein zugehöriges Herstellungsverfahren anzugeben.

Diese Aufgabe wird mit dem Tunneleffekt-Sensor mit den Merkmalen des Anspruches 1 bzw. mit dem Herstellungsverfahren mit den Merkmalen des Anspruches 11 gelöst. Weitere Ausgestaltungen ergeben sich aus den abhängigen Ansprüchen.

Der erfindungsgemäße Tunneleffekt-Sensor nutzt die Möglichkeit, mit Hilfe des Tunneleffektes kleinste Wegdifferenzen im Bereich von einigen 10⁻¹⁰ Metern zu messen. Der Sensor besteht aus einer mechanisch beweglichen Struktur mit einem an Federn aufgehängten Masseteil. Diese Struktur ist schichtartig über einem Substrat angebracht und auf diesem Substrat verankert. Bei einer Beschleunigung des Substrates verschiebt sich das Masseteil aufgrund seiner Trägheit relativ zum Substrat. Mit dem Masseteil verbunden ist eine Elektrode, die einer am Substrat befestigten Elektrode so nahe gegenübersteht, daß beim Anlegen einer Spannung aufgrund des Tunneleffektes ein Strom zwischen diesen Elektroden fließt. Beim Auftreten einer Beschleunigung und damit einer Bewegung des Masseteiles kommt es zu einer Änderung des Abstandes zwischen diesen Elektroden und dadurch zu einer Änderung des zu messenden Tunnelstromes. Da der Tunnelstrom schon bei kleinsten Abstandsänderungen stark variiert, können mit dieser Methode kleinste Beschleunigungen oder Kräfte detektiert werden.

Bei dem erfindungsgemaßen Sensor sind die Tunnelelektroden vorzugsweise als spitze Tunnelelektrode mit gegenüberliegender Gegenelektrode in der Schichtebene des Masseteiles ausgebildet. Der erfindungsgemäße Sensor verfügt über weitere Elektroden, von denen eine oder mehrere starr mit dem Substrat und weitere Elektroden starr mit dem Masseteil verbunden sind und so einander gegenüberliegend angeordnet sind, daß durch Anlegen einer elektrischen Spannung die Lage des Masseteiles relativ zum Substrat verändert werden kann. Diese zusätzlichen Elektroden können z. B. als Kompensationselektroden wirken, wenn zu jedem Zeitpunkt eine so große Spannung an die Elektroden angelegt wird, daß an das Masseteil angreifende Trägheitskräfte ständig kompensiert werden. Die Kompensationselektroden können auch dazu dienen, das Masseteil in eine für die Messung vorgesehene Ausgangsposition zu bringen. Das Masseteil kann dann so angebracht sein, daß es in einer stromlosen Ruhelage eine Position einnimmt, in der die Tunnelelektrode und die Gegenelektrode einen so großen Abstand aufweisen, daß Erschütterungen des Sensors nicht zu einer Beschädigung dieser Elektroden führen. Erst bei einer Messung wird durch Anlegen eines geeigneten Potentiales an die Kompensationselektroden das Masseteil so weit verschoben und elektrostatisch gehalten, daß der Abstand zwischen der Tunnelelektrode und der Gegenelektrode für das Auftreten eines Tunnelstromes ausreichend gering ist.

Die Anordnung sämtlicher Elektroden in der Schichtebene des flächigen Masseteiles ermöglicht eine einfache Herstellbarkeit des Sensors. Insbesondere kann für die Sensorstruktur die dünne Siliziumschicht eines SOI-Substrates verwendet werden. In ein derartiges SOI-Substrat können elektronische Funktionselemente monolithisch integriert werden. Die für die Auswertung der Messung vorgesehene Schaltung und ggf. die für die Kompensation der Trägheitskräfte vorgesehene Schaltung können daher zusammen mit dem Sensor integriert werden.

Es folgt eine Beschreibung des erfindungsgemäßen Sensors anhand der Figuren 1 bis 12.

Fig. 1 bis 3 zeigen verschiedene Ausführungsformen des Sensors in Aufsicht.

Fig. 4 bis 8 bzw. Fig. 9 bis 11 zeigen erfindungsgemäße Sensoren im Querschnitt nach verschiedenen Schritten des Herstellungsverfahrens.

Fig. 12 zeigt einen mit elektronischen Funktionselementen monolithisch integrierten Sensor im Querschnitt.

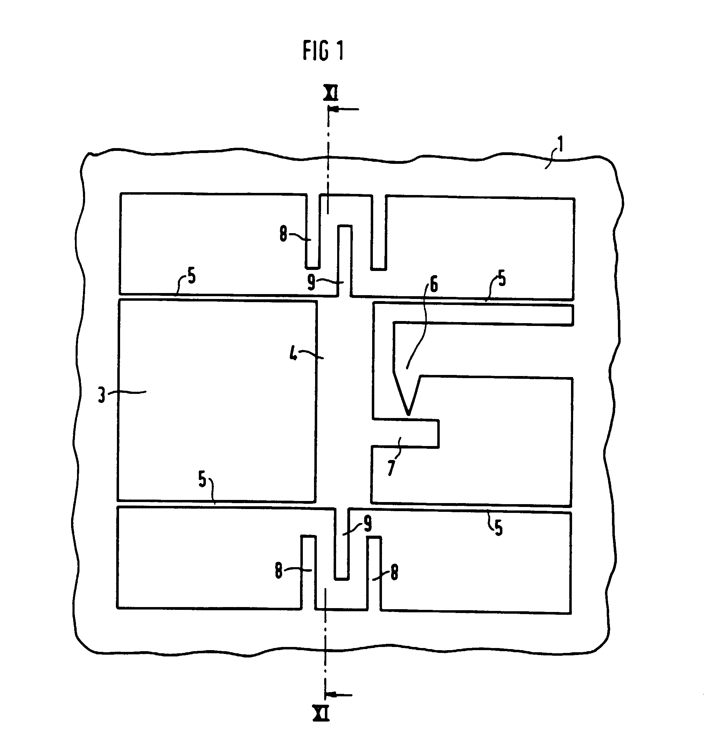

Fig. 1 zeigt ein erstes Ausführungsbeispiel des erfindungsgemäßen Sensors in Aufsicht. Der Sensor ist in einer Sensorschicht 1 strukturiert. Das beweglich angeordnete Masseteil 4 ist an Federn 5 aufgehängt. An diesem Masseteil 4 befindet sich die Gegenelektrode 7 zu der Tunnelelektrode 6, die fest mit dem umgebenden Anteil der Sensorschicht 1 und damit fest mit dem Substrat verbunden ist. Die Tunnelelektrode 6 ist als Tunnelspitze ausgebildet. Diese Tunnelspitze kann auch an dem Masseteil 4 angebracht sein; die Gegenelektrode ist dann fest mit dem Rest der Sensorschicht 1 verbunden. Die Kompensationselektroden 8, 9 sind ebenfalls eingezeichnet. Die Elektroden 8 sind wieder mit dem Hauptteil der Sensorschicht 1 fest verbunden, während die Gegenelektroden 9 an dem Masseteil 4 befestigt sind. Bei diesem Ausführungsbespiel sind die mit dem Masseteil 4 verbundenen Elektroden 9 jeweils zwischen zwei fest angebrachten Elektroden 8 angeordnet, so daß durch elektrostatische Kräfte eine Verschiebung des Masseteiles 4 in Längsrichtung der Elektroden bewirkt werden kann. Der Abstand zwischen Tunnelelektrode 6 und Gegenelektrode 7 kann damit eingestellt werden. Die Sensorschicht 1 kann durch eine Schicht aus nur einem Material oder nur einer Materialzusammensetzung gebildet sein oder aus mehreren Schichten bestehen. Die Sensorschicht 1 kann aus elektrisch leitfähigem Material bestehen. Die Sensorschicht 1 kann z. B. Silizium sein, insbesondere die einkristalline dünne Schicht eines SOI-Substrates. Im Bereich des Masseteiles 4 ist dann die Isolatorschicht entfernt, um eine freie Beweglichkeit des Masseteiles 4 zu erreichen. Dort ist in der Aufsicht das Substrat 3 zu sehen.

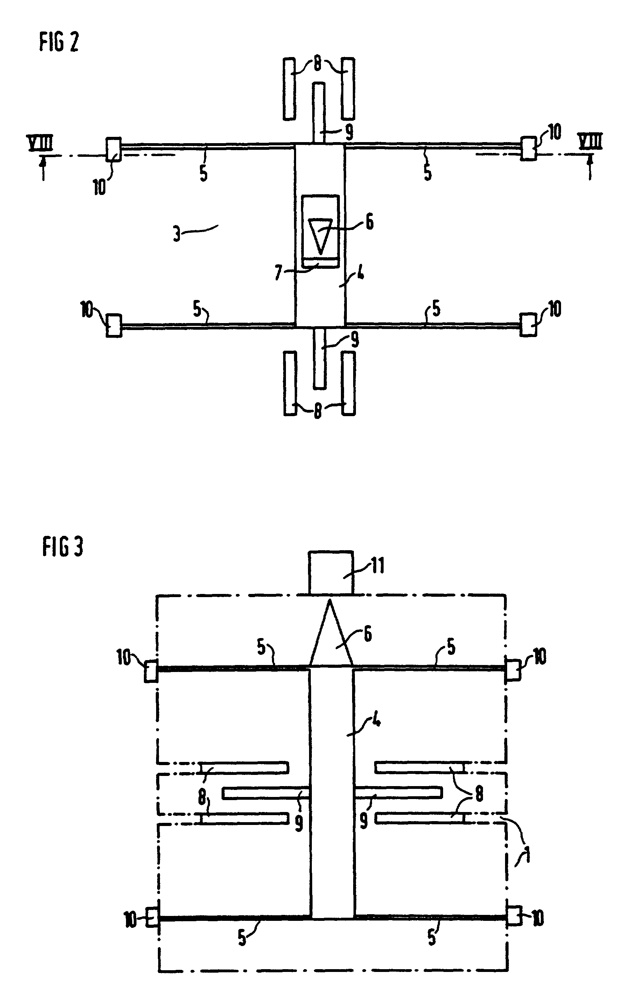

Fig. 2 zeigt ein alternatives Ausführungsbeispiel, bei dem von der Sensorschicht das bewegliche Masseteil 4, die daran angebrachten Kompensationselektroden 9 und die Federn 5 vorhanden sind. Die Federn 5 sind an dem dem Masseteil 4 gegenüberliegenden Ende mittels Verankerungen 10 auf dem Substrat 3 befestigt. Die Tunnelelektrode 6 und die fest angebrachten Kompensationselektroden 8 sind ebenfalls auf dem Substrat 3 angebracht. Die Gegenelektrode 7 ist in dem Masseteil 4 ausgebildet. Die Sensorschicht, aus der das Masseteil 4, die Federn 5, die Kompensationselektroden 9 und ggf. die Tunnelelektrode 6 gebildet sind, kann auch hier der Rest einer einkristallinen Siliziumschicht eines SOI-Substrates sein oder eine Siliziumschicht, die mit einem der nachfolgend beschriebenen Verfahren hergestellt wurde. Auch hier sind sämtliche Elektroden in der Schichtebene des flächigen Masseteiles 4 angeordnet. Die Tunnelelektrode 6 kann z. B. wie eingezeichnet in einer Aussparung des Masseteiles 4 angeordnet sein oder wie in Fig. 1.

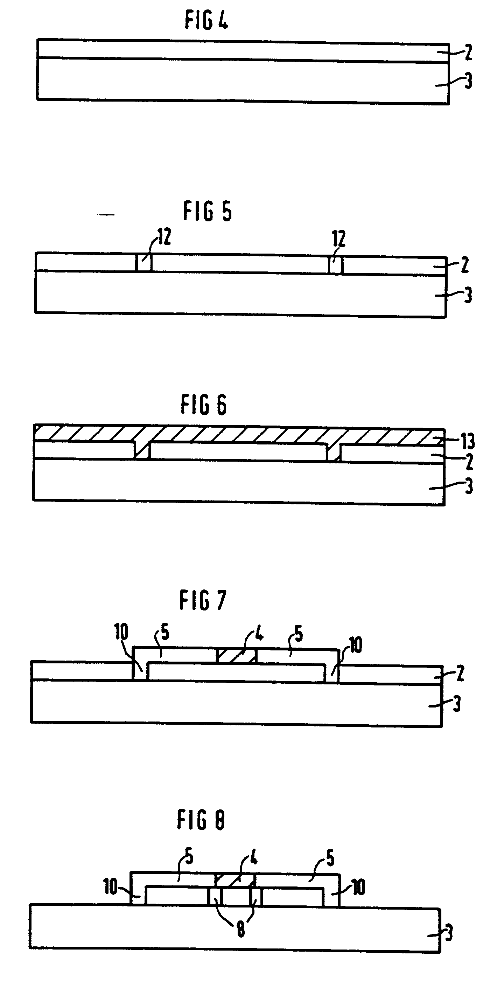

Fig. 3 zeigt zwei alternative Ausführungsformen, bei denen die Tunnelelektrode 6 als spitz zulaufendes Ende des Masseteiles 4 ausgebildet ist. Es sind wieder die Federn 5 und die Kompensationselektroden 8, 9 eingezeichnet. Die Gegenelektrode 11 ist hier der Tunnelspitze gegenüber fest auf dem Substrat angebracht. Die Federn 5 können mittels Verankerungen 10 auf der Substratoberseite befestigt sein. Die strichpunktiert eingezeichnete Umrandung in Fig. 3 stellt die alternative Ausführungsform mit ganzflächiger Sensorschicht 1 dar, aus der der Sensor strukturiert wurde. Die Gegenelektrode 11 befindet sich dann an oder in dem fest auf dem Substrat angebrachten Teil der Sensorschicht 1. Diese Sensorschicht 1 kann z. B. die einkristalline oberste Schicht eines SOI-Substrates sein. Die damit verbundenen Kompensationselektroden 8 sind ebenfalls Teil der Sensorschicht 1 und befinden sich auf restlichen Anteilen der Isolatorschicht. In dem Bereich, in dem das Masseteil 4 beweglich sein muß, ist die Isolatorschicht zwischen der Siliziumschicht und dem Substrat entfernt. Die Kompensationselektroden 8, 9 können bei geeigneter Anordnung dazu dienen, den Abstand zwischen der Tunnelelektrode 6 und der Gegenelektrode 7 erst im Betrieb des Sensors auf den niedrigen Arbeitsabstand von wenigen Nanometern zu bringen. Im stromlosen Ruhezustand kann das Masseteil 4 dann so angeordnet sein, daß der Abstand zwischen der Tunnelelektrode 6 und der Gegenelektrode 7 so groß ist, daß durch eventuell auftretende Beschleunigungen und damit verbundenem Anschlag der Tunnelspitze an der Gegenelektrode der Sensor nicht beschädigt wird.

Die Kompensationselektroden 8, 9 können auch so angeordnet und ausgerichtet sein, daß die elektrostatische Kraft beim Anlegen einer geeigneten Spannung an diese Elektroden auch dazu verwendet werden kann, bei einer Beschleunigung des Substrates die auftretende Trägheitskraft, die an dem Masseteil 4 angreift, zu kompensieren und auf diese Weise den Abstand der Tunnelelektrode von der Gegenelektrode stets konstant zu halten. Die Differenz zwischen der dazu notwendigen Spannung und der Spannung im unbeschleunigten Fall ist dann ein direktes Maß für die zu messende Beschleunigung. Da zwischen den Kompensationselektroden 8, 9 nur anziehende Kräfte wirken, ist es vorgesehen, derartige Kompensationselektroden in verschiedenen Ausrichtungen anzuordnen, so daß die Beschleunigungskräfte in verschiedenen Richtungen in der Sensorebene gemessen werden können. Die Elektroden zur Kompensation der Beschleunigungskraft können z. B. parallel oder senkrecht zur Hauptempfindlichkeitsrichtung des Beschleunigungssensors angeordnet sein. Im Fall der beidseitigen Kraftkompensation wird die bewegliche Struktur von zwei entgegengesetzt wirkenden elektrostatischen Kräften so gehalten, daß sich der gewünschte Abstand der Tunnelelektrode 6 von der Gegenelektrode 7 einstellt. Die mit dem Substrat fest verbundene Kompensationselektrode 8 ist entweder Teil der Sensorschicht 1 oder einer auf dem Substrat abgeschiedenen zusätzlichen Schicht.

Die Schaltungen, die die elektrischen Spannungen liefern und die Meßergebnisse auswerten, können bei dem erfindungsgemäßen Sensor monolithisch integriert sein. Besonders vorteilhaft ist die Herstellung einer solchen Integration in einem SOI-Substrat unter Verwendung von CMOS-Techniken und der Technologie der Mikromechanik. Nach der Herstellung der Transistoren und anderer für die Schaltung erforderlicher elektronischer Funktionselemente in einer einkristallinen Siliziumschicht wird in dem für den Sensor vorgesehenen Bereich diese Siliziumschicht für den Sensor strukturiert. Auf diese Weise können in einer Siliziumschicht eines SOI-Substrates sowohl die elektronischen Schaltungen als auch die mechanischen Sensorkomponenten integriert sein.

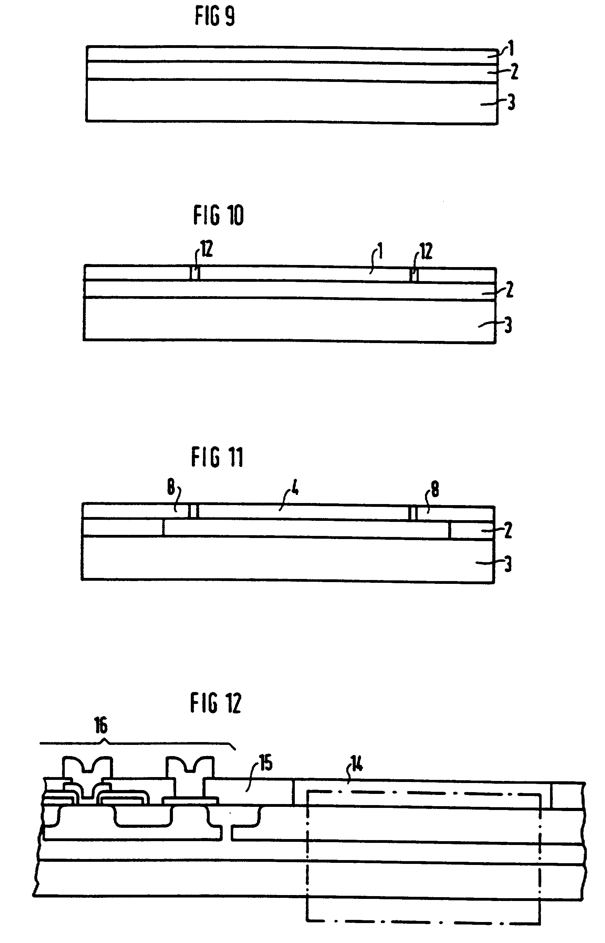

In den Figuren 4 bis 8 ist ein erfindungsgemäßer Sensor im Querschnitt nach verschiedenen Schritten des Herstellungsverfahrens dargestellt. Auf einem Substrat 3 wird ganzflächig eine Hilfsschicht 2 z. B. aus Siliziumoxid abgeschieden (s. Fig. 4). An den für Verankerungen vorgesehenen Stellen werden in dieser Hilfsschicht 2 Öffnungen 12 hergestellt (s. Fig. 5). Danach wird entsprechend Fig. 6 ganzflächig eine Schicht 13 z. B. aus Polysilizium oder aus einkristallinem Silizium abgeschieden. Diese Schicht 13 wird entsprechend dem herzustellenden Sensor strukturiert, so daß entsprechend Fig. 7 das Masseteil 4, die Federn 5 und die Verankerungen 10 von dieser Schicht 13 übrig bleiben. Die Hilfsschicht 2 wird dann entfernt, und man erhält die Struktur der Fig. 8, die der in Fig. 2 eingezeichneten Ansicht entspricht. In den Fig. 6 bis 8 ist die dieser Ansicht entsprechende Schnittfläche der Schicht 13 jeweils durch Schraffur bezeichnet.

Einfacher gestaltet sich die Herstellung, wenn von einem SOI-Substrat ausgegangen wird. Ein solches Substrat ist im Querschnitt in Fig. 9 dargestellt. Auf dem eigentlichen Substrat 3 befindet sich eine Isolatorschicht 2, z. B. aus Oxid, und darauf eine einkristalline Siliziumschicht 1, die als Sensorschicht vorgesehen ist. Dieses SOI-Substrat wird eventuell strukturiert und z. B. durch Ionenimplantation dotiert. Dann wird die Struktur des beweglichen Teils z. B. durch ein Lithographieverfahren auf die obere einkristalline Siliziumschicht 1 übertragen und z. B. durch eine Trockenatzung herausgeätzt, so daß sich die in Fig. 10 eingezeichneten Öffnungen 12 in der Siliziumschicht 1 ergeben. Eventuell wird noch die Gegenelektrode aufgebracht oder Metallisierungen für die vorgesehenen Elektroden abgeschieden, was z. B. durch Bedampfen eventuell durch eine Schattenmaske erfolgen kann. Durch die Metallisierungen können die elektrischen Eigenschaften der Elektroden verbessert werden. Vorteilhaft ist in jedem Fall, wenn zumindest die Tunnelelektrode mit einer Metallschicht überzogen ist. Danach wird entsprechend Fig. 11 durch die Öffnungen 12 die bewegliche Struktur durch selektives Wegätzen der unter der einkristallinen Siliziumschicht 1 befindlichen Isolatorschicht 2 z. B. durch HF-Ätzen befreit.

Der in Fig. 11 gezeigte Querschnitt entspricht der in Fig. 1 eingezeichneten Ansicht. Beim Entfernen des Oxids der Isolatorschicht 2 unter den mechanisch frei beweglichen Teilen kann ein zu großes Unteratzen in angrenzende Bereiche z. B. durch eine Grabenatzung durch die Isolatorschicht 2 und anschließendes Auffüllen z. B. mit Polysilizium vermieden werden.

Bei der monolithischen Integration der Ansteuerschaltungen werden die entsprechenden elektronischen Funktionselemente 16 (s. Fig. 12) zunächst mit den Verfahren der Siliziumtechnologie in einem Bereich der einkristallinen Siliziumschicht 1 hergestellt. Falls die einkristalline Siliziumschicht 1 (z. B. des SOI-Substrates) im Anschluß an diesen Herstellungsprozeß ganzflächig mit einer Deckschicht oder Passivierungsschicht 15 bedeckt ist, wird darin eine Öffnung 14 im Bereich des herzustellenden Sensors hergestellt. In dieser Öffnung 14 ist die Siliziumschicht 1 freigelegt. In dem in Fig. 12 strichpunktiert eingezeichneten Ausschnitt wird dann entsprechend den Fig. 9 bis 11 verfahren.

Vorteile des erfindungsgemäßen Sensors sind die sehr viel höhere Genauigkeit, ein extrem großer Meßbereich, sehr geringes Signalrauschen, äußerst geringe Empfindlichkeit in Richtungen quer zur Meßrichtung, die Möglichkeit des Einsatzes moderner Prozeßtechnologien, Störunanfälligkeit durch interne Signalverarbeitung und mögliche Digitalisierung, kleine Abmessungen, geringes Gewicht und große Bandbreite durch geringste Massen. Ein besonderer Vorteil ist die mögliche monolithische Integration elektronischer und mechanischer Komponenten und die Anwendung von Standardprozessen der VLSI-Technologie.

## Patentansprüche

1. Tunneleffekt-Sensor,
bei dem in einer Sensorschicht (1) ein an Federn (5) bewegliches Masseteil (4) ausgebildet ist,
bei dem eine Tunnelelektrode (6) und eine Gegenelektrode (7; 11) einander gegenüberliegend in der Ebene dieser Sensorschicht (1) angeordnet sind,
bei dem von diesen Elektroden (6, 7, 11) nur eine an dem Masseteil (4) angeordnet ist und
bei dem Kompensationselektroden (8, 9) vorhanden sind, die so angeordnet sind, daß das Masseteil (4) durch eine an diese Kompensationselektroden (8, 9) angelegte elektrische Spannung in einer vorbestimmten Position gehalten werden kann.

2. Sensor nach Anspruch 1,
bei dem die Sensorschicht (1) Silizium ist.

3. Sensor nach Anspruch 2,
bei dem die Sensorschicht (1) die Siliziumschicht eines SOI-Substrates ist.

4. Sensor nach Anspruch 1,
bei dem die Sensorschicht (1) aus einem leitfähigen Material besteht.

5. Sensor nach Anspruch 1 oder 4,
bei dem die Sensorschicht (1) aus mehreren Schichten besteht.

6. Sensor nach einem der Ansprüche 1 bis 5,
bei dem die Tunnelelektrode (6) an dem Masseteil (4) befestigt ist.

7. Sensor nach einem der Ansprüche 1 bis 5,
bei dem die Gegenelektrode (6) an dem Masseteil (4) befestigt ist.

8. Sensor nach einem der Ansprüche 1 bis 7,
bei dem in stromloser Ruhelage des Masseteils (4) die Tunnelelektrode (6) und die Gegenelektrode (7) sich in einem vergrößerten Abstand zueinander befinden und
bei dem die Kompensationselektroden (8, 9) so angeordnet sind, daß durch Anlegen einer vorgesehenen Spannung das Masseteil (4) in eine Position gebracht werden kann, in der die Tunnelelektrode (6) und die Gegenelektrode (7) sich in einem für eine Messung vorgesehenen Abstand zueinander befinden.

9. Sensor nach einem der Ansprüche 1 bis 8,
bei dem elektronische Funktionselemente monolithisch integriert sind.

10. Sensor nach Anspruch 9,
bei dem die elektronischen Funktionselemente eine Schaltung enthalten, durch die an die Kompensationselektroden (8, 9) jeweils eine so große elektrische Spannung angelegt wird, daß auf das Masseteil (4) einwirkende Trägheitskräfte elektrostatisch kompensiert werden.

11. Verfahren zur Herstellung eines Sensors nach einem der Ansprüche 9 oder 10, rückbezogen auf Anspruch 3,
bei dem die elektronischen Funktionselemente zunächst in der Siliziumschicht des SOI-Substrates hergestellt werden,
bei dem dann in einem für den Sensor vorgesehenen Bereich diese Siliziumschicht als Sensorschicht (1) strukturiert wird und
bei dem dann in diesem Bereich die Isolatorschicht (2) des SOI-Substrates mindestens soweit entfernt wird, wie für die Beweglichkeit des Masseteils (4) erforderlich ist.

## Claims

1. Tunnel-effect sensor in which a mass part (4) that can move on springs (5) is formed in a sensor layer (1),
in which a tunnelling electrode (6) and back electrode (7, 11) are arranged opposite one another in the plane of this sensor layer (1),
in which only one of these electrodes (6, 7, 11) is arranged on the mass part (4), and
in which there are compensation electrodes (8, 9) which are arranged in such a way that the mass part (4) can be held in a predetermined position by an electric voltage applied to these compensation electrodes (8, 9).

2. Sensor according to Claim 1, in which the sensor layer (1) is silicon.

3. Sensor according to Claim 2, in which the sensor layer (1) is the silicon layer of an SOI substrate.

4. Sensor according to Claim 1, in which the sensor layer (1) consists of a conductive material.

5. Sensor according to Claim 1 or 4, in which the sensor layer (1) consists of a plurality of layers.

6. Sensor as claimed in one of Claims 1 to 5, in which the tunnelling electrode (6) is fastened to the mass part (4).

7. Sensor according to one of Claims 1 to 5, in which the back electrode (6) is fastened to the mass part (4).

8. The sensor according to one of Claims 1 to 7, in which when the mass part (4) is in the current-free neutral position, the tunnelling electrode (6) and the back electrode (7) are an increased distance apart, and in which the compensation electrodes (8, 9) are arranged in such a way that, by application of a specific voltage, the mass part (4) can be brought into a position in which the tunnelling electrode (6) and the back electrode (7) are at the mutual separation intended for a measurement.

9. Sensor according to one of Claims 1 to 8, in which the functional electronic elements are monolithically integrated.

10. Sensor according to Claim 9, in which the functional electronic elements contain a circuit by virtue of which the value of the electric voltage applied to the compensation electrodes (8, 9) is in each case such as to compensate electrostatically for the inertial forces acting on the mass party (4).

11. Process for producing a sensor according to one of Claims 9 or 10, related to Claim 3, in which the functional electronic elements are firstly produced in the silicon layer of the SOI substrate,
in which the silicon layer is then structured as a sensor layer (1) in a region intended for the sensor, and
in which the insulator layer (2) of the SOI substrate is then removed in this region at least to the extent required for mobility of the mass part (4).

## Revendications

1. Capteur à effet tunnel,
dans lequel une partie massique (4) mobile sur des ressorts (5) est formée dans une couche du capteur (1),
dans lequel une électrode tunnel (6) et une contre-électrode (7; 11) sont disposées l'une en face de l'autre dans le plan de cette couche du capteur (1),
dans lequel seule l'une de ces électrodes (6, 7, 11) est disposée dans la partie massique (4) et dans lequel des électrodes de compensation (8, 9) sont présentes, lesquelles sont disposées de telle sorte que la partie massique (4) puisse être maintenue dans une position prédéterminée sous l'effet d'une tension électrique appliquée à ces électrodes de compensation (8, 9).

2. Capteur selon la revendication 1,
dans lequel la couche du capteur (1) est du silicium.

3. Capteur selon la revendication 2,
dans lequel la couche du capteur (1) est la couche de silicium d'un substrat SOI.

4. Capteur selon la revendication 1,
dans lequel la couche du capteur (1) est constituée d'un matériau conducteur.

5. Capteur selon la revendication 1 ou 4,
dans lequel la couche du capteur (1) est constituée de plusieurs couches.

6. Capteur selon l'une des revendications 1 à 5,
dans lequel l'électrode de tunnel (6) est fixée à la partie massique (4).

7. Capteur selon l'une des revendications 1 à 5,
dans lequel la contre-électrode (6) est fixée à la partie massique (4).

8. Capteur selon l'une des revendications 1 à 7, dans lequel l'électrode de tunnel (6) et la contre-électrode (7) se trouvent à une distance agrandie l'une de l'autre en position de repos sans courant de la partie massique (4) et dans lequel les électrodes de compensation (8, 9) sont disposées de telle sorte que la partie massique (4) peut être amenée par application d'une tension prévue dans une position dans laquelle l'électrode tunnel (6) et la contre-électrode (7) se trouvent à une distance l'une de l'autre prévue pour une mesure.

9. Capteur selon l'une des revendications 1 à 8,
dans lequel les éléments fonctionnels électroniques font l'objet d'une intégration monolithique.

10. Capteur selon la revendication 9,
dans lequel les éléments fonctionnels électroniques contiennent un circuit par lequel une tension électrique d'une telle intensité est appliquée aux électrodes de compensation (8, 9) que les forces d'inertie agissant sur la partie massique (4) sont compensées de manière électrostatique.

11. Procédé de fabrication d'un capteur selon l'une des revendications 9 ou 10, rapporté à la revendication 3, dans lequel les éléments fonctionnels électroniques sont d'abord fabriqués dans la couche de silicium du substrat SOI, dans lequel cette couche de silicium est ensuite structurée comme couche du capteur (1) dans une zone prévue pour le capteur et dans lequel la couche isolante (2) du substrat SOI dans cette zone est enlevée au moins sur l'épaisseur nécessaire à la mobilité de la partie massique (4).
